# EUROPÄISCHE PATENTANMELDUNG

(11) **EP 4 458 634 A1**
(43) Veröffentlichungstag der Anmeldung: **06.11.2024**
(21) Anmeldenummer: 24164901.1
(22) Anmeldetag: 20.03.2024
(51) Int. Cl.: B60W 40/10

(54) **VERFAHREN ZUR BESTIMMUNG EINES REICHWEITEWERTES EINES FAHRZEUGS**

(30) Priorität: 17.04.2023 DE 102023203466
(71) Anmelder: Continental Reifen Deutschland GmbH, 30175 Hannover (DE)
(72) Erfinder: Kurz, Martin, 30175 Hannover (DE)
(74) Vertreter: Continental Corporation

(57) **Zusammenfassung**

Die Erfindung betrifft ein Verfahren zur Bestimmung eines Reichweitewertes eines Fahrzeugs (1), aufweisend folgende Schritte:
- Bereitstellen eines Fahrzeugs (1), wobei das Fahrzeug (1) mindestens einen Fahrzeugreifen (2) aufweist;
- Bereitstellen einer Auswertevorrichtung (3), wobei die Auswertevorrichtung (3) dazu geeignet ist, einen Reichweitewert des Fahrzeugs (1) in Abhängigkeit einer für die Bewegung des Fahrzeugs (1) zur Verfügung stehenden Energie und in Abhängigkeit eines Rollwiderstandsbeiwertes des mindestens einen Fahrzeugreifens (1) zu bestimmen;
- Bestimmen eines statischen Rollwiderstandsbeiwertes des mindestens einen Fahrzeugreifens (2);
- Bestimmen des Reichweitewertes des Fahrzeugs (1) in Abhängigkeit des statischen Rollwiderstandsbeiwertes und der für die Bewegung des Fahrzeugs (1) zur Verfügung stehenden Energie;
- Bestimmen eines Drucks, der in einem Innenraum (4) des mindestens einen Fahrzeugreifens (4) herrscht;
- Bestimmen einer Temperatur des mindestens einen Fahrzeugreifens (2);
- Bestimmen einer aktuellen Profiltiefe des mindestens einen Fahrzeugreifens (2);
- Bestimmen eines dynamischen Rollwiderstandsbeiwertes des mindestens einen Fahrzeugreifens (2) in Abhängigkeit des statischen Rollwiderstandsbeiwertes, des Drucks, der Temperatur und der aktuellen Profiltiefe;
- Ändern des Reichweitewertes des Fahrzeugs (1) in Abhängigkeit des dynamischen Rollwiderstandsbeiwertes des mindestens einen Fahrzeugreifens (2).

## Beschreibung

Die Erfindung betrifft ein Verfahren zur Bestimmung eines Reichweitewertes eines Fahrzeugs.

Die Erfindung geht aus von einem Verfahren zur Bestimmung eines Reichweitewertes eines Fahrzeugs. Dabei weist das Verfahren die folgenden Schritte auf:
- Bereitstellen eines Fahrzeugs, wobei das Fahrzeug mindestens einen Fahrzeugreifen aufweist;
- Bereitstellen einer Auswertevorrichtung, wobei die Auswertevorrichtung dazu geeignet ist, einen Reichweitewert des Fahrzeugs in Abhängigkeit einer für die Bewegung des Fahrzeugs zur Verfügung stehenden Energie und in Abhängigkeit eines Rollwiderstandsbeiwertes des mindestens einen Fahrzeugreifens zu bestimmen;
- Bestimmen eines statischen Rollwiderstandsbeiwertes des mindestens einen Fahrzeugreifens;
- Bestimmen des Reichweitewertes des Fahrzeugs in Abhängigkeit des statischen Rollwiderstandsbeiwertes und der für die Bewegung des Fahrzeugs zur Verfügung stehenden Energie.

Insbesondere wird die für die Bewegung des Fahrzeugs zur Verfügung stehende Energie im Rahmen des erfindungsgemäßen Verfahrens bestimmt, insbesondere mittels einer dazu vorgesehenen Vorrichtung, und eine Information über die für die Bewegung des Fahrzeugs zur Verfügung stehende Energie wird an die Auswertevorrichtung übertragen, so dass diese Information mittels der Auswertevorrichtung verarbeitet und analysiert werden kann. Bei der für die Bewegung des Fahrzeugs zur Verfügung stehenden Energie handelt es sich beispielsweise im Fall eines Elektrofahrzeugs um eine in einem elektrochemischen Energiespeicher gespeicherte elektrische Energie, die für den Antrieb des Fahrzeugs verwendet werden kann. Im Fall eines Fahrzeugs mit einem Verbrennungsmotor handelt es sich beispielsweise um eine in einem Treibstofftank gespeicherte Menge an Treibstoff, mit dem der Verbrennungsmotor zum Antrieb des Fahrzeugs betrieben werden kann.

Bei dem Fahrzeug handelt es sich beispielsweise um einen PKW, um einen LKW oder um ein Zweirad.

Die Auswertevorrichtung kann insbesondere ein fester oder beweglicher Bestandteil des Fahrzeugs selbst sein oder es kann sich bei der Auswertevorrichtung insbesondere um eine bezüglich des Fahrzeugs externe Vorrichtung handeln, die sich also außerhalb des Fahrzeugs befindet. Bei der Auswertevorrichtung handelt es sich beispielsweise um eine Com putervorrichtung.

Der statische Rollwiderstandsbeiwert des mindestens einen Fahrzeugreifens entspricht einem Wert, der für den mindestens einen Fahrzeugreifen als Neureifen, also zu dem Startzeitpunkt seiner Nutzung, bekannt und/oder bestimmbar ist.

Aus dem Stand der Technik sind Verfahren zur Bestimmung eines Reichweitewertes eines Fahrzeugs bekannt. Dabei ist es aus dem Stand der Technik auch bekannt, in Abhängigkeit des statischen Rollwiderstandsbeiwertes und der für die Bewegung des Fahrzeugs zur Verfügung stehenden Energie den Reichweitewert des Fahrzeugs zu bestimmen. Entsprechend der aus dem Stand der Technik bekannten Verfahren könnten Änderungen des Rollwiderstandsbeiwertes des mindestens einen Fahrzeugreifens unberücksichtigt bleiben. Der statische Rollwiderstandsbeiwert könnte mit zunehmender Einsatzdauer des mindestens einen Fahrzeugreifens in zunehmendem Umfang von dem tatsächlichen Rollwiderstandsbeiwert des mindestens einen Fahrzeugreifens abweichen. Auf Grundlage insbesondere eines, von dem tatsächlichen Rollwiderstandsbeiwert des mindestens einen Fahrzeugreifens in steigendem Maß abweichenden, Rollwiderstandsbeiwert ermittelten Reichweitewerts könnte eine tatsächliche Reichweite des Fahrzeugs nicht ausreichend genau ermittelt werden. Die tatsächliche Reichweite ist die Reichweite, beispielsweise in Kilometern oder in Metern, die das Fahrzeug höchstens unter Berücksichtigung der Bedingungen, unter denen das Fahrzeug betrieben wird, erreichen kann. Beispielsweise könnte gemäß der aus dem Stand der Technik bekannten Verfahren eine solche Reichweite ermittelt werden, die insbesondere unter Berücksichtigung der für die Bewegung des Fahrzeugs zur Verfügung stehenden Energie nicht erreichbar sein könnte.

Der Erfindung liegt daher die Aufgabe zugrunde, ein Verfahren zur Bestimmung eines Reichweitewertes eines Fahrzeugs, wobei mittels des Verfahrens eine solche Reichweite ermittelt werden kann, die insbesondere unter Berücksichtigung der für die Bewegung des Fahrzeugs zur Verfügung stehenden Energie tatsächlich erreichbar sein kann.

Gelöst wird die erfindungsgemäß gestellte Aufgabe dadurch, dass das Verfahren die folgenden Schritte aufweist:
- Bestimmen eines Drucks, der in einem Innenraum des mindestens einen Fahrzeugreifens herrscht;
- Bestimmen einer Temperatur des mindestens einen Fahrzeugreifens;
- Bestimmen einer aktuellen Profiltiefe des mindestens einen Fahrzeugreifens;
- Bestimmen eines dynamischen Rollwiderstandsbeiwertes des mindestens einen Fahrzeugreifens in Abhängigkeit des statischen Rollwiderstandsbeiwertes, des Drucks, der Temperatur und der aktuellen Profiltiefe;
- Ändern des Reichweitewertes des Fahrzeugs in Abhängigkeit des dynamischen Rollwiderstandsbeiwertes des mindestens einen Fahrzeugreifens.

Bei dem dynamischen Rollwiderstandsbeiwert handelt es sich um den dynamischen Rollwiderstandsbeiwert des mindestens einen Fahrzeugreifens.

Die aktuelle Profiltiefe wird insbesondere anhand von Fahrparametern des Fahrzeugs oder des mindestens einen Fahrzeugreifens, anhand einer radialen Beschleunigung eines Laufstreifens des mindestens einen Fahrzeugreifens während eines Rollvorgangs des mindestens einen Fahrzeugreifens, in Abhängigkeit von Daten über die räumliche Position des Fahrzeugs und/oder mittels einer Berücksichtigung der mit dem mindestens einen Fahrzeugreifen zurückgelegten Wegstrecke ermittelt.

Durch den erfindungsgemäßen Umstand, wonach das Verfahren die folgenden weiteren Schritte aufweist:
- Bestimmen eines Drucks, der in einem Innenraum des mindestens einen Fahrzeugreifens herrscht;
- Bestimmen einer Temperatur des mindestens einen Fahrzeugreifens;
- Bestimmen einer aktuellen Profiltiefe des mindestens einen Fahrzeugreifens;
- Bestimmen eines dynamischen Rollwiderstandsbeiwertes des mindestens einen Fahrzeugreifens in Abhängigkeit des statischen Rollwiderstandsbeiwertes, des Drucks, der Temperatur und der aktuellen Profiltiefe;
- Ändern des Reichweitewertes des Fahrzeugs in Abhängigkeit des dynamischen Rollwiderstandsbeiwertes des mindestens einen Fahrzeugreifens,
wird ein dynamischer Rollwiderstandsbeiwert bereitgestellt. Der dynamische Rollwiderstandsbeiwert entspricht dem tatsächlichen Rollwiderstandsbeiwert des mindestens einen Fahrzeugreifens.

Das Ändern des Reichweitewertes des Fahrzeugs in Abhängigkeit des dynamischen Rollwiderstandsbeiwertes führt zu einem geänderten Reichwertwert der der tatsächlichen Reichweite des Fahrzeugs in einem höheren Maß entspricht, als es bei Reichweitewerten der Fall sein könnte, die gemäß der aus dem Stand der Technik bekannten Verfahren bestimmt werden. Die Änderung des Reichweitewertes kann beispielsweise als Korrektur des Reichweitewertes bezeichnet werden. Bei der Änderung handelt es sich beispielsweise um eine Änderung um 0% bis 100 % oder um mehr als 100% des zunächst ermittelten Reichweitewertes.

Somit wird ein verbessertes Verfahren zur Bestimmung eines Reichweitewertes eines Fahrzeugs bereitgestellt.

Weitere vorteilhafte Ausgestaltungsformen der vorliegenden Erfindung sind Gegenstand der Unteransprüche.

Gemäß einer vorzugsweisen Ausgestaltungsform der vorliegenden Erfindung kann für den Fall, wonach zunächst keine aktuelle Profiltiefe des mindestens einen Fahrzeugreifens, sondern lediglich der Druck, der in einem Innenraum des mindestens einen Fahrzeugreifens herrscht; und die Temperatur des mindestens einen Fahrzeugreifens bestimmt werden, eine angenäherter dynamischer Rollwiderstand in Abhängigkeit des statischen Rollwiderstandsbeiwertes, des Drucks, der Temperatur und der aktuellen Profiltiefe bestimmt werden. Unter Nutzung eines Modells kann dann die aktuelle Profiltiefe aus diesem angenäherten dynamischen Rollwiderstand ermittelt werden.

Gemäß einer vorzugsweisen Ausgestaltungsform der vorliegenden Erfindung weist das Verfahren die folgenden weiteren Schritte auf:
- Bestimmen einer Umgebungstemperatur des mindestens einen Fahrzeugreifens;
- Ändern des dynamischen Rollwiderstandsbeiwertes in Abhängigkeit der Umgebungstemperatur des mindestens einen Fahrzeugreifens;
- Ändern des Reichweitewertes in Abhängigkeit des geänderten dynamischen Rollwiderstandsbeiwertes.

Die Umgebungstemperatur wird beispielsweise mittels eines Temperatursensors des Fahrzeugs ermittelt. Anschließend wird dann eine Information über die ermittelte Umgebungstemperatur an die Auswertevorrichtung übermittelt. Bei der Umgebungstemperatur handelt es sich um die Temperatur in der unmittelbaren Umgebung des mindestens einen Fahrzeugreifens.

Gemäß einer nächsten vorzugsweisen Ausgestaltungsform der vorliegenden Erfindung weist das Verfahren die folgenden weiteren Schritte auf:
- Bestimmen einer Radlast des mindestens einen Fahrzeugreifens;
- Ändern des dynamischen Rollwiderstandsbeiwertes in Abhängigkeit der Radlast des mindesten seinen Fahrzeugreifens;
- Ändern des Reichweitewertes in Abhängigkeit des geänderten dynamischen Rollwiderstandsbeiwertes.
Die Radlast wird beispielsweise mittels eines Gewichtssensors des Fahrzeugs ermittelt. Anschließend wird dann eine Information über die ermittelte Radlast an die Auswertevorrichtung übermittelt. Die Radlast betrifft das Rad des Fahrzeugs, an dem der mindestens eine Fahrzeugreifen angeordnet ist.

Gemäß einer nächsten vorzugsweisen Ausgestaltungsform der vorliegenden Erfindung weist das Verfahren die folgenden weiteren Schritte auf:
- Bestimmen eines Luftwiderstands des Fahrzeugs;
- Ändern des Reichweitewertes in Abhängigkeit des Luftwiderstands des Fahrzeugs.
Der Luftwiderstand wird beispielsweise mittels eines Luftwiderstandssensors, beispielswiese in Abhängigkeit einer Luftströmung, des Fahrzeugs ermittelt. Anschließend wird dann eine Information über den ermittelten Luftwiderstand an die Auswertevorrichtung übermittelt.

Gemäß einer nächsten vorzugsweisen Ausgestaltungsform der vorliegenden Erfindung weist das Verfahren die folgenden weiteren Schritte auf:
- Bestimmen eines Steigungswiderstands des Fahrzeugs;
- Ändern des Reichweitewertes in Abhängigkeit des Steigungswiderstands des Fahrzeugs.

Gemäß einer nächsten vorzugsweisen Ausgestaltungsform der vorliegenden Erfindung weist das Verfahren die folgenden weiteren Schritte auf:
- Bestimmen eines Beschleunigungswiderstands des Fahrzeugs;
- Ändern des Reichweitewertes in Abhängigkeit des Beschleunigungswiderstands des Fahrzeugs.

Gemäß einer nächsten vorzugsweisen Ausgestaltungsform der vorliegenden Erfindung weist das Verfahren die folgenden weiteren Schritte auf:
- Bestimmen eines Rollwiderstands des Fahrzeugs;
- Ändern des Reichweitewertes in Abhängigkeit des Rollwiderstands des Fahrzeugs.

Gemäß einer nächsten vorzugsweisen Ausgestaltungsform der vorliegenden Erfindung weist das Verfahren die folgenden weiteren Schritte auf:
- Bestimmen eines Antriebswirkungsgrads des Fahrzeugs;
- Ändern des Reichweitewertes in Abhängigkeit des Antriebswirkungsgrads des Fahrzeugs.

Gemäß einer nächsten vorzugsweisen Ausgestaltungsform der vorliegenden Erfindung weist das Verfahren die folgenden weiteren Schritte auf:
- Bestimmen einer radspezifischen Antriebsenergie eines Rades des Fahrzeugs, an dem der mindestens eine Fahrzeugreifen verwendet wird;
- Ändern des Reichweitewertes in Abhängigkeit der radspezifischen Antriebsenergie.
Die radspezifische Antriebsenergie eines Rades des Fahrzeugs betrifft beispielsweise für den Fall eines Elektromotors als Traktionsmotor des Fahrzeugs oder im Fall eines Radmotors die Bestimmung der für ein spezielles Rad, an dem der mindestens eine Fahrzeugreifen angeordnet sein kann, erforderliche Energie zum Betrieb des Rades.

Weitere Vorteile, Merkmale und Einzelheiten, auf die die Erfindung in ihrem Umfang aber nicht beschränkt ist, werden nun anhand der Zeichnung näher beschrieben.

Es zeigt:

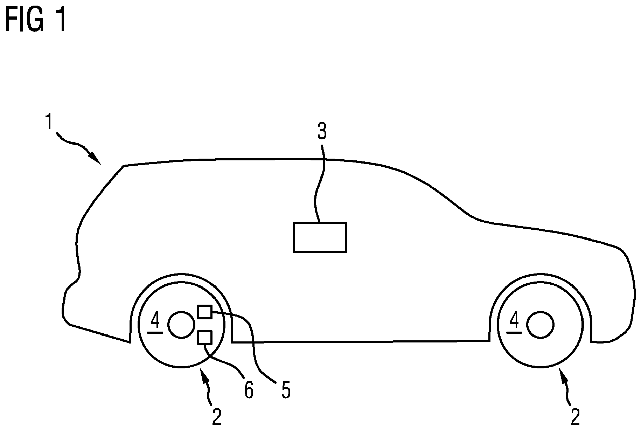

Fig. 1: Eine schematische Darstellung eines Fahrzeugs.

In der Figur 1 ist ein Fahrzeug 1 schematisch dargestellt. Das Fahrzeug 1 weist mindestens einen Fahrzeugreifen 2 auf. Erfindungsgemäß wird eine Auswertevorrichtung 3 bereitgestellt, wobei die Auswertevorrichtung 3 dazu geeignet ist, einen Reichweitewert des Fahrzeugs 1 in Abhängigkeit einer für die Bewegung des Fahrzeugs 1 zur Verfügung stehenden Energie und in Abhängigkeit eines Rollwiderstandsbeiwertes des mindestens einen Fahrzeugreifens 2 zu bestimmen. Gemäß der Darstellung in der Figur 1 ist die Auswertevorrichtung 3 Bestandteil des Fahrzeugs 1. Erfindungsgemäß wird ein statischer Rollwiderstandsbeiwertes des mindesten einen Fahrzeugreifens 2 bestimmt. Dann wird ein Reichweitewert des Fahrzeugs 1 in Abhängigkeit des statischen Rollwiderstandsbeiwertes des mindestens einen Fahrzeugreifens 2 und der für die Bewegung des Fahrzeugs 1 zur Verfügung stehenden Energie bestimmt.

Erfindungsgemäß werden folgende Schritte durchgeführt:
- Bestimmen eines Drucks, der in einem Innenraum 4 des mindestens einen Fahrzeugreifens 2 herrscht, insbesondere mittels eines Drucksensors 5;
- Bestimmen einer Temperatur des mindestens einen Fahrzeugreifens 2, insbesondere mittels eines Temperatursensors 6;
- Bestimmen einer aktuellen Profiltiefe des mindestens einen Fahrzeugreifens 2;
- Bestimmen eines dynamischen Rollwiderstandsbeiwertes des mindestens einen Fahrzeugreifens 2 in Abhängigkeit des statischen Rollwiderstandsbeiwertes, des Drucks, der Temperatur und der aktuellen Profiltiefe;
- Ändern des Reichweitewertes des Fahrzeugs 1 in Abhängigkeit des dynamischen Rollwiderstandsbeiwertes des mindestens einen Fahrzeugreifens 2.

Bei dem dynamischen Rollwiderstandsbeiwert handelt es sich um den dynamischen Rollwiderstandsbeiwert des mindestens einen Fahrzeugreifens 2.

### Bezugszeichenliste

- 1: Fahrzeug
- 2: Fahrzeugreifen
- 3: Auswertevorrichtung
- 4: Innenraum eines Fahrzeugreifens
- 5: Drucksensor
- 6: Temperatursensor

## Patentansprüche

1. Verfahren zur Bestimmung eines Reichweitewertes eines Fahrzeugs (1), aufweisend folgende Schritte:
- Bereitstellen eines Fahrzeugs (1), wobei das Fahrzeug (1) mindestens einen Fahrzeugreifen (2) aufweist;
- Bereitstellen einer Auswertevorrichtung (3), wobei die Auswertevorrichtung (3) dazu geeignet ist, einen Reichweitewert des Fahrzeugs (1) in Abhängigkeit einer für die Bewegung des Fahrzeugs (1) zur Verfügung stehenden Energie und in Abhängigkeit eines Rollwiderstandsbeiwertes des mindestens einen Fahrzeugreifens (1) zu bestimmen;
- Bestimmen eines statischen Rollwiderstandsbeiwertes des mindestens einen Fahrzeugreifens (2);
- Bestimmen des Reichweitewertes des Fahrzeugs (1) in Abhängigkeit des statischen Rollwiderstandsbeiwertes und der für die Bewegung des Fahrzeugs (1) zur Verfügung stehenden Energie;
**gekennzeichnet durch die weiteren Schritte:**
- Bestimmen eines Drucks, der in einem Innenraum (4) des mindestens einen Fahrzeugreifens (4) herrscht;
- Bestimmen einer Temperatur des mindestens einen Fahrzeugreifens (2);
- Bestimmen einer aktuellen Profiltiefe des mindestens einen Fahrzeugreifens (2);
- Bestimmen eines dynamischen Rollwiderstandsbeiwertes des mindestens einen Fahrzeugreifens (2) in Abhängigkeit des statischen Rollwiderstandsbeiwertes, des Drucks, der Temperatur und der aktuellen Profiltiefe;
- Ändern des Reichweitewertes des Fahrzeugs (1) in Abhängigkeit des dynamischen Rollwiderstandsbeiwertes des mindestens einen Fahrzeugreifens (2).

2. Verfahren nach Anspruch 1, **gekennzeichnet durch** die weiteren Schritte:
- Bestimmen einer Umgebungstemperatur des mindestens einen Fahrzeugreifens (2);
- Ändern des dynamischen Rollwiderstandsbeiwertes in Abhängigkeit der Umgebungstemperatur des mindestens einen Fahrzeugreifens (2);
- Ändern des Reichweitewertes in Abhängigkeit des geänderten dynamischen Rollwiderstandsbeiwertes.

3. Verfahren nach Anspruch 1 oder 2, **gekennzeichnet durch** die weiteren Schritte:
- Bestimmen einer Radlast des mindestens einen Fahrzeugreifens (2);
- Ändern des dynamischen Rollwiderstandsbeiwertes in Abhängigkeit der Radlast des mindesten seinen Fahrzeugreifens (2);
- Ändern des Reichweitewertes in Abhängigkeit des geänderten dynamischen Rollwiderstandsbeiwertes.

4. Verfahren nach einem der vorhergehenden Ansprüche **gekennzeichnet durch** die weiteren Schritte:
- Bestimmen eines Luftwiderstands des Fahrzeugs (1);
- Ändern des Reichweitewertes in Abhängigkeit des Luftwiderstands des Fahrzeugs (1).

5. Verfahren nach einem der vorhergehenden Ansprüche **gekennzeichnet durch** die weiteren Schritte:
- Bestimmen eines Steigungswiderstands des Fahrzeugs (1);
- Ändern des Reichweitewertes in Abhängigkeit des Steigungswiderstands des Fahrzeugs (1).

6. Verfahren nach einem der vorhergehenden Ansprüche **gekennzeichnet durch** die weiteren Schritte:
- Bestimmen eines Beschleunigungswiderstands des Fahrzeugs (1);
- Ändern des Reichweitewertes in Abhängigkeit des Beschleunigungswiderstands des Fahrzeugs (1).

7. Verfahren nach einem der vorhergehenden Ansprüche **gekennzeichnet durch** die weiteren Schritte:
- Bestimmen eines Rollwiderstands des Fahrzeugs (1);
- Ändern des Reichweitewertes in Abhängigkeit des Rollwiderstands des Fahrzeugs (1).

8. Verfahren nach einem der vorhergehenden Ansprüche **gekennzeichnet durch** die weiteren Schritte:
- Bestimmen eines Antriebswirkungsgrads des Fahrzeugs (1);
- Ändern des Reichweitewertes in Abhängigkeit des Antriebswirkungsgrads des Fahrzeugs (1).

9. Verfahren nach einem der vorhergehenden Ansprüche **gekennzeichnet durch** die weiteren Schritte:
- Bestimmen einer radspezifischen Antriebsenergie eines Rades des Fahrzeugs (1), an dem der mindestens eine Fahrzeugreifen (2) verwendet wird;
- Ändern des Reichweitewertes in Abhängigkeit der radspezifischen Antriebsenergie.
